# EUROPEAN PATENT APPLICATION

(11) **EP 2 666 699 A2**
(43) Date of publication of application: **27.11.2013**
(21) Application number: 13167768.4
(22) Date of filing: 15.05.2013
(51) Int. Cl.: B62B 5/06, B62B 1/04

(54) **Multipurpose trolley with foldable handle.**

(30) Priority: 21.05.2012 IT MI20120196 U
(71) Applicant: CLABER S.P.A., 33080 Fiume Veneto (PN) (IT)
(72) Inventor: Spadotto, Oliviano, 33170 PORDENONE (IT); Franchini, Gaetano, 33080 FIUME VENETO (PN) (IT)
(74) Representative: Mittler, Enrico

(57) **Abstract**

A multipurpose trolley (1) is described with flat base (2) provided with resting wheels (3) and with a handle (4). Said base (2) is also provided with positioning seats (6, 9, 10) and with means (11, 15-17, 30) for fastening a load to be transported and said handle (4) is extendable upwards from said base (2) and foldable thereon.

## Description

The present invention relates to a multipurpose trolley with foldable handle.

Various types of trolleys are known provided with a flat base and with a fixed or extendable handle which branches off upwards from an end thereof. Single-use trolleys are usually involved, that are designed to have a single type of use, it being transporting garden components, such as reels, tool containers, waste materials and more.

Their structure is often complicated, cumbersome and unsuitable for uses other than the intended ones.

It is the object of the present invention to make a trolley which has innovative features with respect to the ones currently on the market, thus being simple in structure, versatile to use and easily storable when not used, with a minimum space occupation.

According to the invention, such an object is achieved by a multipurpose trolley with flat base provided with resting wheels and handle, **characterized in that** said base is provided with positioning seats and with means for fastening a load to be transported and said handle is extendable upwards from said base and foldable thereon.

The features of the present invention will become apparent from the following detailed description of two embodiments thereof, shown by way of non-limiting example in the accompanying drawings, in which:
figure 1 shows a perspective view of a two-wheel multipurpose trolley with extended handle and in vertical position;
figure 2 shows a perspective view of the two-wheel multipurpose trolley with extended handle and folded on the base;
figure 3 shows the lower part of the handle, separated from the trolley base;
figure 4 shows the trolley base without handle and without wheels, in a perspective view from the front;
figure 5 shows the trolley handle connection area of the trolley base, in a perspective view from behind;
figure 6 shows an enlarged detail of the coupling between trolley handle and base;
figure 7 shows a perspective view of the multipurpose trolley used to support a reel;
figure 8 shows a top view of the trolley base in figure 7 without reel and with handle removed;
figure 9 shows a section view of the trolley base according to the line IX-IX in figure 8;
figure 10 shows a section view of the trolley base according to the line X-X in figure 8;
figure 11 shows an enlarged detail from figure 10, with base-reel hook in closed position for hooking to a reel;
figure 12 shows the same enlarged detail from figure 10, with hook in open position;
figure 13 shows a perspective view of the multipurpose trolley with a container;
figure 14 shows a perspective view of the multipurpose trolley with a tray;
figure 15 shows a perspective view of a four-wheel multipurpose trolley with partially extended handle and in vertical position.
The multipurpose trolley 1 shown in figures 1 and 2 comprises a base 2 made of plastic material provided with two freely rotatable resting wheels 3 and with an offset handle for maneuver 4 which is extendable from said base 2 and is provided with handgrip 5.

Base 2 comprises two oval cavities 6 and a metal tubular U-shaped supporting frame 7, with ends inserted within specific side housings 8. Frame 7 extends below base 2 thus offering a mechanical support thereto.

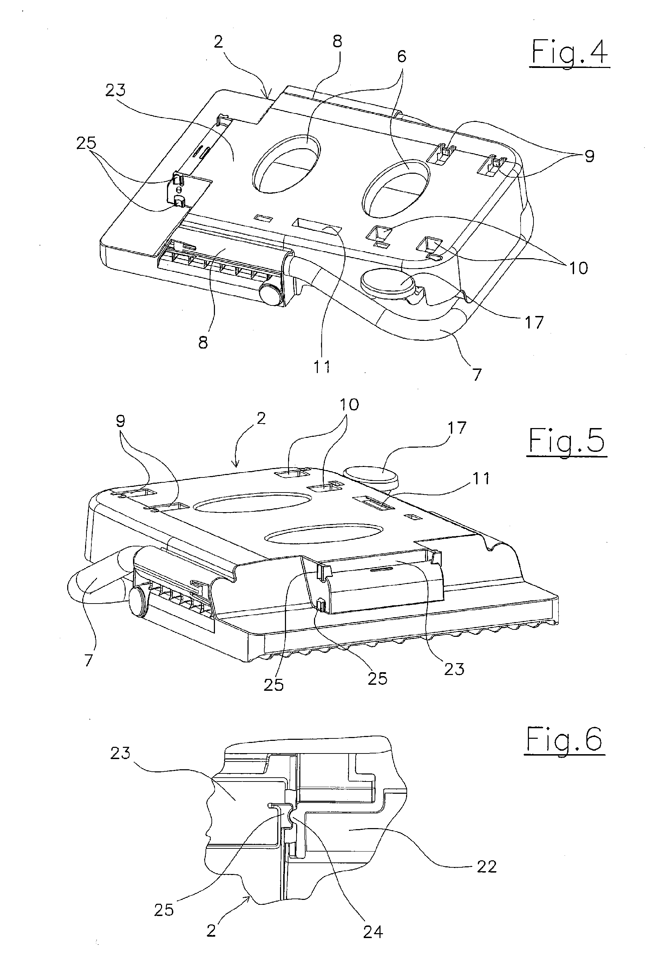

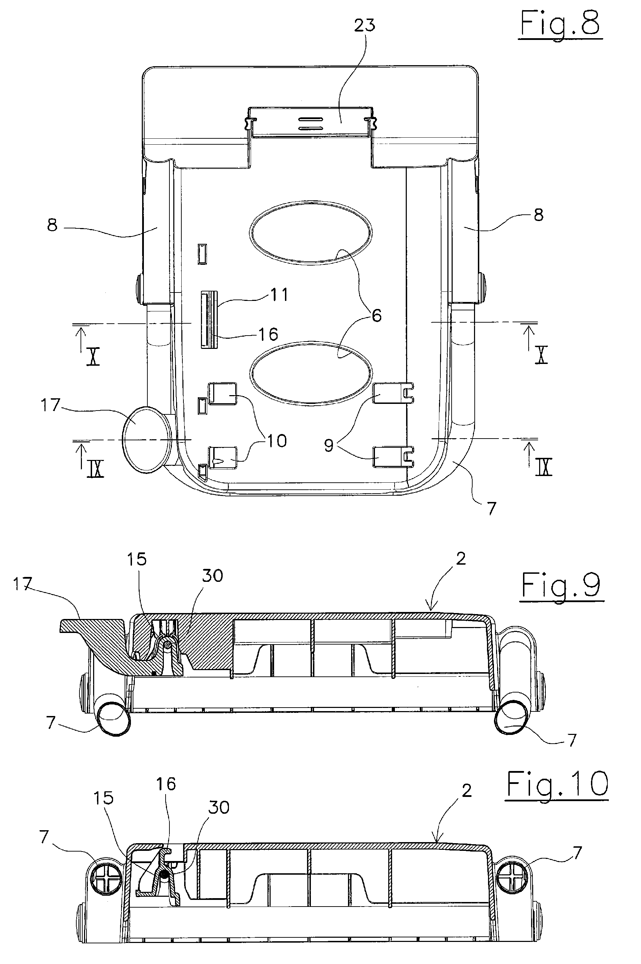

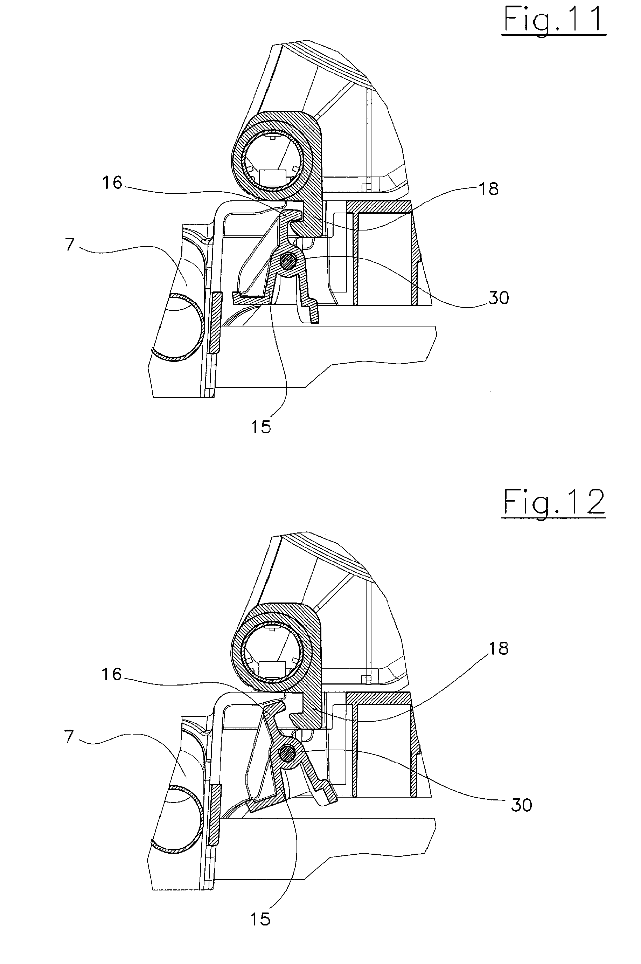

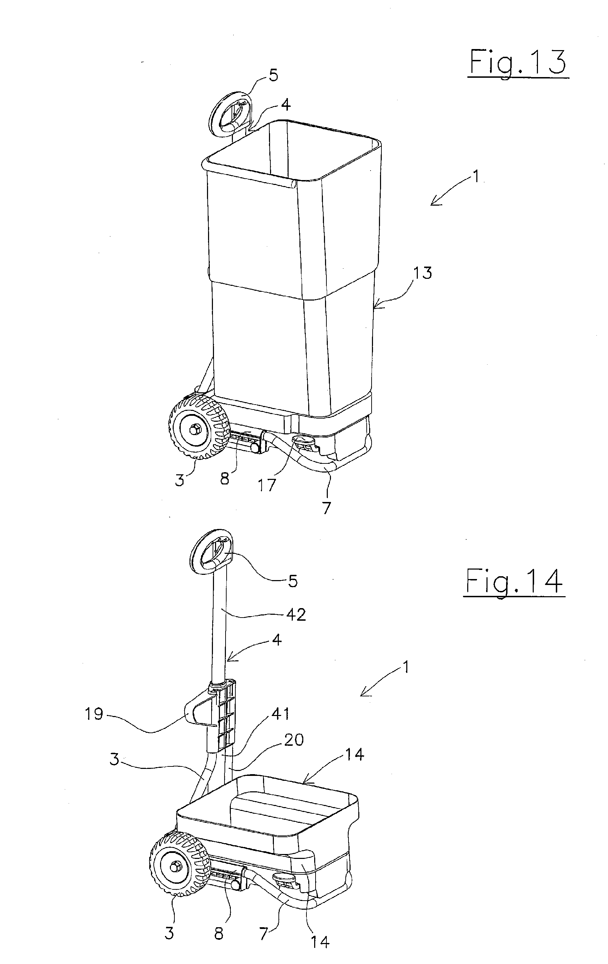

Base 2 also comprises two pairs of positioning seats 9, 10 and fastening means for loads to be transported such as for example a reel 12 (figure 6) or a container 13 (figure 12), or a tray 14 (figure 13). Said fastening means comprise a cavity 11 and a lever 15 rotatable about a fulcrum 30 supported by base 2 and actuated by a releasing pedal 17 which branches off therefrom (figures 6-8). Lever 15 is provided with a hooking element 16 which by means of pressure on pedal 17, may be moved from a "closed" or hooked position (figures 10, 11) to an "open" or released position (figure 12).

The mode for fastening the load onto said base 2 consists in placing the load so that projections thereof are at the oval cavities 6 of the positioning seats 9, 10 and cavity 11, upon prior setting of the releasing pedal 17 to "open" position, so that the hooking element 16, provided to the lever 15, makes said cavity 11 accessible to a particular projection 18 of the load. Then by setting the releasing pedal 17 to "closed" position, the hooking element 16 engages projection 18, thus stably anchoring the load onto base 2 (see figure 11). The load is released by resetting the releasing pedal 17 to "open" position (figure 12) and then lifting the load for the removal or replacement thereof.

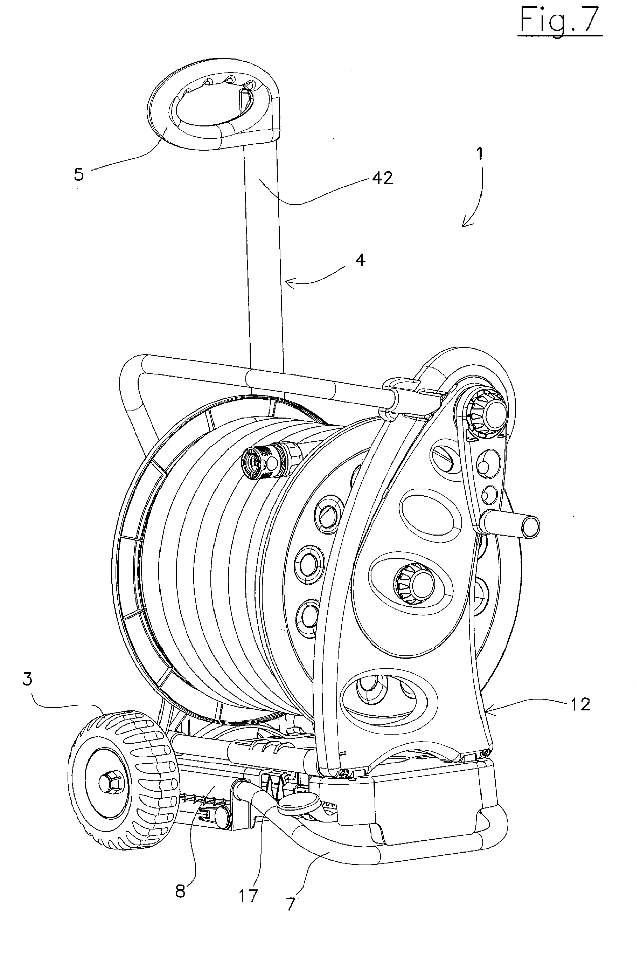

Thereby, various types of loads, for example a reel 12 (figure 7), or various types of container (figures 13, 14), may find stable and at the same time temporary support on base 2 of trolley 1, which functions may be most assorted.

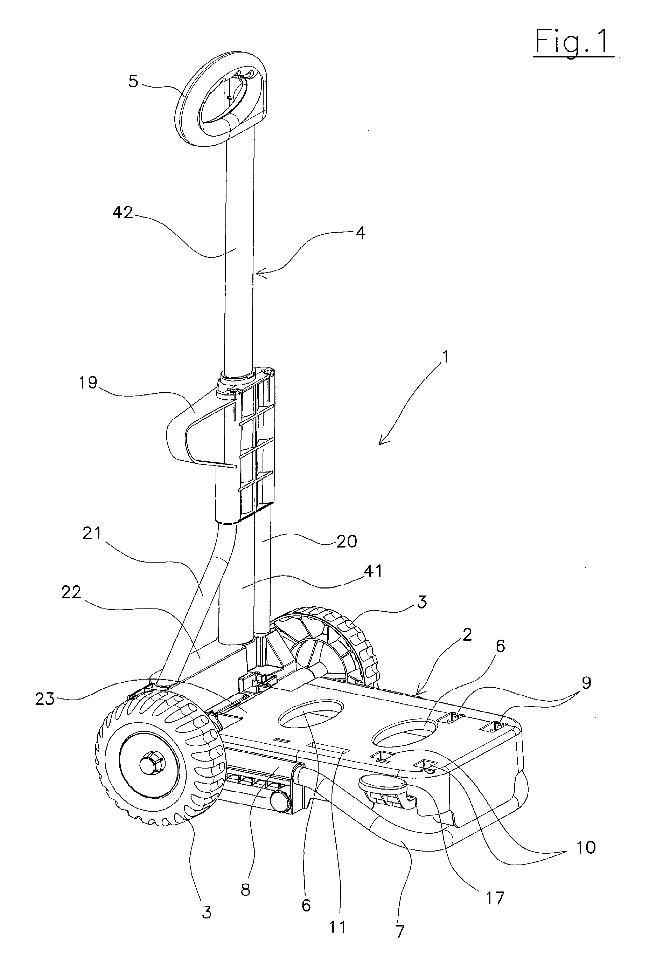

As shown in figure 1, handle 4 is telescopic and comprises a fixed tubular lower part 41 and an upper part 42 slidably movable within said lower part 41, thus having the ability of being completely accommodated within said fixed part 41. Handgrip 5 allows the height control of handle 4, which provides the positions of handle completely extended and handle completely closed.

The fixed part 41 is held together by means of a junction structure 19, from which two tubular elements branch off, a straight tubular element 20 and a curved tubular element 21, respectively, to allow pulling trolley 1 in a balanced way, even though said handle 4 is offset.

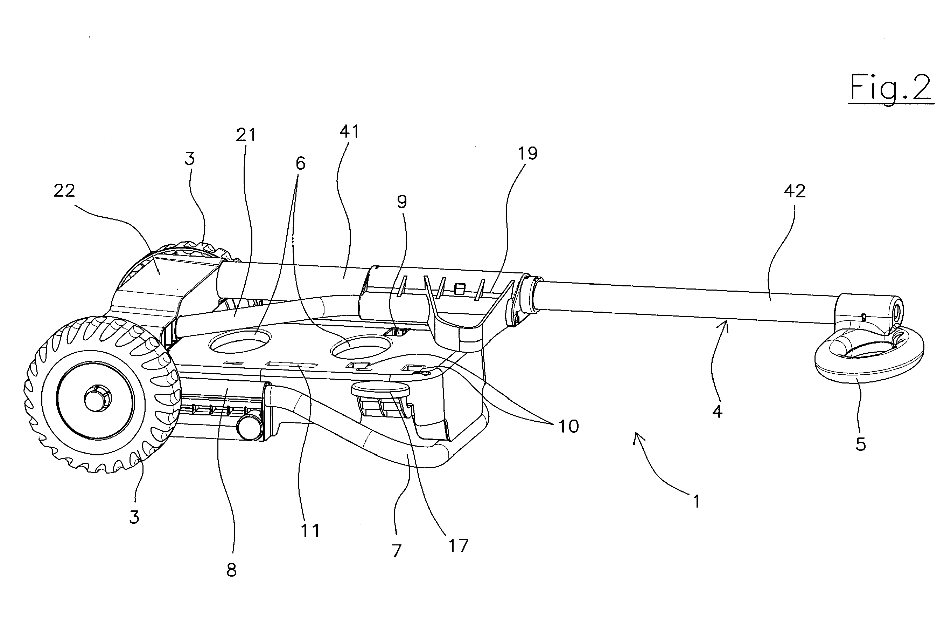

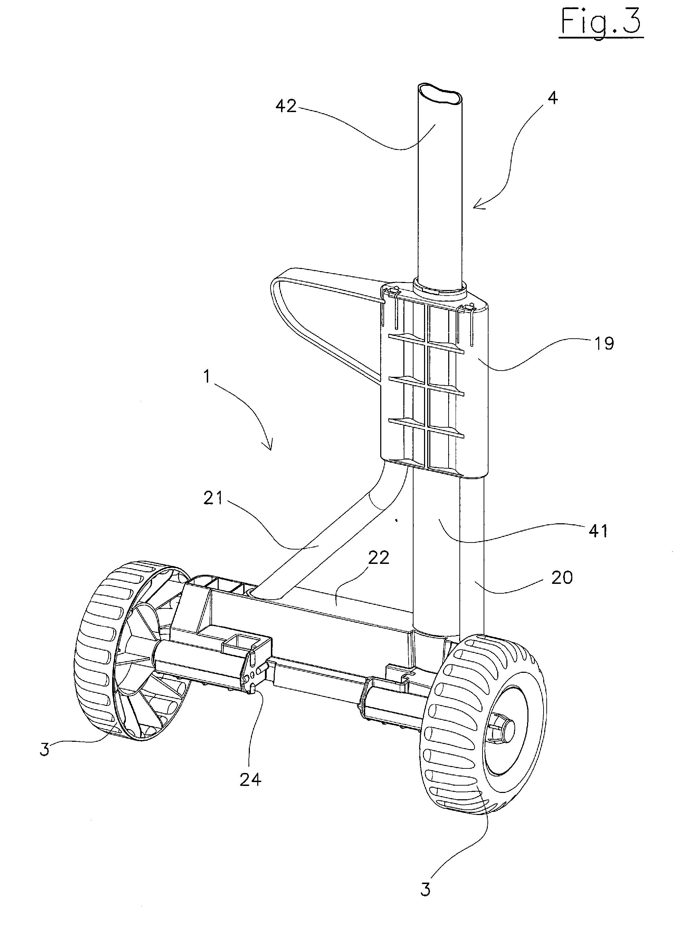

Said tubular elements 20, 21 and the fixed part 41 of handle 4 are fastened to a crosspiece 22 (figure 3) rotatably coupled to a rear portion 23 of base 2 (figures 4 and 5). Crosspiece 22 is also rotatably coupled to the wheels 2 by means of a pair of hubs 51, the facing surfaces 26 of which provide four projections 24 (figure 3). Portion 23 is in turn equipped with a pair of cavities 25 (figures 4 and 5) adapted to house two of the four projections 24 each time. Thus two separate positions are provided: one position in which handle 4 is vertical (figure 1) and one position in which handle 4 is folded on base 2 (figure 2).

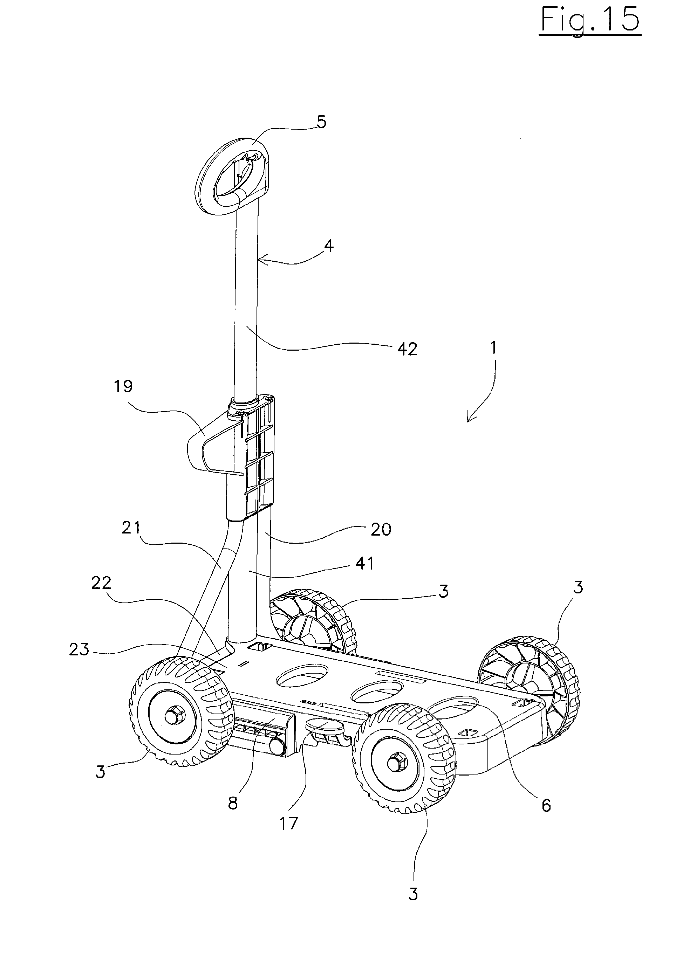

A trolley model with four freely rotatable resting wheels 3 may also be provided (see figure 15). In the four-wheel example, the presence is not provided of the metal tubular supporting frame 7, because base 2 alone, which is larger in size with respect to the two-wheel example, is able of supporting the weight of the fastened load. The oval cavities 6 become three, while the positioning seats 9, 10 are located at the four corners of the surface of base 2. In any event, the load fastening modes remain the ones described when in two-wheel trolley 1.

## Claims

1. A multipurpose trolley (1) with flat base (2) provided with resting wheels (3) and handle (4), **characterized in that** said base (2) is provided with positioning seats (9, 10) and with means (11, 15-17, 30) for fastening a load to be transported and said handle (4) is extendable upwards from said base (2) and foldable thereon.

2. A multipurpose trolley (1) according to claim 1, **characterized in that** said fastening means comprise a cavity (11) and a lever (15) which is rotatable about a fulcrum (30) supported by the base (2) and actuated by a releasing pedal (17) that branches off therefrom.

3. A multipurpose trolley (1) according to claim 2, **characterized in that** said lever (15) is provided with a hooking element (16) which by means of pressure on the pedal (17), may be moved from a "closed" or hooked position to an "open" or released position.

4. A multipurpose trolley (1) according to claim 1, **characterized in that** said handle (4) is offset and is telescopic, comprising a fixed tubular lower part (41) and an upper part (42) slidably movable within said lower part.

5. A multipurpose trolley (1) according to claim 4, **characterized in that** said fixed part (41) and said tubular elements (20, 21) are held together by means of a junction structure (19) and fastened to a crosspiece (22) rotatably coupled to a portion (23) of the base (2).

6. A multipurpose trolley (1) according to claim 5, **characterized in that** said crosspiece (22) is provided with four projections (24) at each coupling surface (26) with said portion (23) of the base (2), and said portion (23) of the base (2) is equipped with a pair of cavities (25) adapted to house two of said four projections (24) each time, so as to achieve a position with vertical handle and a position with folded handle.

7. A multipurpose trolley (1) according to any one of claims 1-7, **characterized in that** said base (2) is provided with two wheels (3) and with a supporting tubular frame (7) with ends inserted within specific side housings (8).

8. A multipurpose trolley (1) according to any one of claims 1-7, **characterized in that** said base (2) is resting on four wheels (3).
